# EUROPÄISCHE PATENTSCHRIFT

(11) **EP 0 825 058 B1**
(45) Veröffentlichungstag und Bekanntmachung des Hinweises auf die Patenterteilung: **22.01.2003**
(21) Anmeldenummer: 97111397.2
(22) Anmeldetag: 05.07.1997
(51) Int. Cl.: B60K 41/22, F16H 61/04

(54) **Verfahren zum Schalten eines Doppelkupplungsgetriebes und Doppelkupplungsgetriebe mit Synchronisiereinrichtung**
Method for gear shift of a double clutch gearbox and double clutch transmission with synchronizing device
Procédé de changement de vitesses d'une boîte de vitesses à double embrayage et transmission à double embrayage avec dispositif de synchronisation

(30) Priorität: 08.08.1996 DE 19631983
(43) Veröffentlichungstag der Anmeldung: 25.02.1998
(73) Patentinhaber: Volkswagen Aktiengesellschaft, 38436 Wolfsburg (DE)
(72) Erfinder: Ludanek, Harald, Dr., 38547 Calberlah (DE); Cappelmann, Bernd, Dipl.-Ing., 38176 Wendeburg-Neubrück (DE); Haack, Reinhold, Dipl.-Ing., 38106 Braunschweig (DE)

(56) Entgegenhaltungen:
- EP-A- 0 042 677
- EP-A- 0 288 779
- EP-A- 0 435 374
- DE-A- 3 527 401
- DE-A- 4 031 851
- DE-A- 4 436 526
- US-A- 4 527 678

## Beschreibung

Die Erfindung betrifft ein Verfahren zum Schalten eines Doppelkupplungsgetriebes gemäß dem Oberbegriff der nebengeordneten Patentansprüche 1 bzw. 2.

Die Erfindung betrifft weiterhin ein Doppelkupplungsgetriebe mit zwei Getriebeeingangswellen und einer Getriebeabtriebswelle zum Betrieb gemäß eines Schaltverfahrens gemäß der Erfindung.

Die in Kraftfahrzeugen vorherrschenden Handschaltgetriebe sind einfach und robust, haben jedoch den Nachteil, daß während des Schaltens eine Zugkraftunterbrechung auftritt. In Pkws sind herkömmliche Handschaltgetriebe üblicherweise mit Einkonus-Synchronisierungen nach dem System Borg-Warner ausgestattet.

Konventionelle Automatikgetriebe vermeiden zwar eine Zugkraftunterbrechung während des Schaltens, haben jedoch u.a. wegen des notwendigen hydrodynamischen Wandlers zum Anfahren (Föttinger-Kupplung) einen schlechten Wirkungsgrad; darüber hinaus haben sie ein hohes Gewicht.

Es hat daher Versuche gegeben, herkömmliche Getriebe automatisch und insbesondere unter Last zu schalten.

Zu den lastschaltenden Getrieben gehören Doppelkupplungsgetriebe im Stile des PDK (Porsche-Doppelkupplungs-Getriebe). Es handelt sich dabei um ein Getriebe mit zwei Getriebeeingangswellen, die auf eine gemeinsame Getriebeausgangswelle arbeiten, wobei in der Regel die beiden Getriebeeingangswellen koaxial zueinander angeordnet sind. Auf der einen Getriebeeingangswelle befinden sich üblicherweise die Zahnräder für die geradzahligen Gänge und auf der anderen Getriebeeingangswelle die Zahnräder für die ungeradzahligen Gänge. Jede der beiden Getriebeeingangswellen kann über eine eigene, unabhängige Kupplung in Gleit- oder Haftreibung mit der Brennkraftmaschine (Motor) verbunden werden.

Auf diese Weise ist es möglich, Gangwechsel zugkraftunterbrechungsfrei durchzuführen. Damit können theoretisch Automatikgetriebe konstruiert werden, die einen guten Wirkungsgrad aufweisen. Voraussetzung ist jedoch, daß die herkömmlichen Synchronringe weiter verwendet werden.

Es hat sich bei der Konstruktion von automatisch betätigten Doppelkupplungsgetrieben herausgestellt, daß Steuerung und Regelung solcher Getriebe kompliziert ist und der erwartete Komfort nicht zu realisieren ist. Die Erfahrung zeigt, daß Schaltgetriebe, die mit den üblichen Sperrsynchronringen automatisiert geschaltet werden, erhebliche Probleme mit sich bringen, mit denen nicht gerechnet wurde. Insbesondere die bei einer hydraulischen Betätigung auftretenden Kräfte und Geschwindigkeiten führen unter Umständen zu einem Versagen der Synchronvorrichtung.

Es hat daher Bestrebungen gegeben, die Hydraulikbetätigung mit modulierten Drücken zu betreiben. Der hierfür notwendige Aufwand führte zu unvertretbar hohen Kosten, die in der Serienfertigung von Kraftfahrzeugen nicht hinzunehmen sind.

Andere Lastschaltgetriebe mit einer einzelnen Anfahrkupplung bedienen sich einer Hilfskupplung, die im längsten Gang angeordnet sein muß, damit beim Hochschalten ein Füllmoment erzeugt werden kann, das bei jedem beliebigen Gangwechsel hilft, die Zugkraftunterbrechung zu minimieren.

Es hat schließlich zentrale Synchronisiervorrichtungen für das ganze Getriebe gegeben, um bei einer hydraulischen Betätigung die erwähnten Probleme beim Schalten der herkömmlichen Sperrsynchronringe zu vermeiden. Bei der Zentraisynchronisierung ist eine zentrale Synchronisiereinheit so angeordnet, daß beispielsweise eine Getriebeabtriebswelle abgebremst oder angetrieben werden kann. Dazu sind zusätzliche mechanische, hydraulische oder elektrische Antriebe notwendig, was im normalen Pkw-Bau zu unvertretbar hohen Kosten und Gewichten führt.

Schließlich sind Motorsteuerungskonzepte entwickelt worden, bei denen eine Drehzahlanpassung der Getriebeeingangswelle durch entsprechende Regelung des Verbrennungsmotors durchgeführt wurde. Wegen der dabei beteiligten hohen Massen und daraus resultierenden hohen Massenträgheiten ist ein solches Verfahren ungünstig. Darüber hinaus entsteht subjektiv für den Fahrer ein Gefühl des Ausgeliefertseins. Ein beispielsweise bei Talfahrt ordnungsgemäß beim Rückschalten hochdrehender Motor wird den ungeübten Fahrer verschrecken.

Ein weiterer negativer Effekt von herkömmlichen Synchronisiervorgängen ist, daß zum Beschleunigen oder Abbremsen der jeweiligen Getriebeeingangswelle Drehmomente erforderlich sind, die auf die Getriebeausgangswelle und damit auf das Fahrzeug wirken. Soll der Synchronisiervorgang schnell vonstatten gehen, wie es für Pkws zu fordern ist (< 1/2 sek), so können sehr starke Fahrzeugreaktionen auftreten, da bei Erreichen des Synchronlaufs die Synchronisiermomente schlagartig zusammenbrechen und sich die so ergebende große Momentänderung vom Fahrer als großer Ruck wahrgenommen wird. Um solche Komforteinbußen zu vermeiden, ist bei automatisierten Handschaltgetrieben, deren Betätigungselemente hydraulisch arbeiten, mit den bereits oben erwähnten modulierten Drücken gearbeitet worden.

Bei den bekannten automatisch schaltenden Getrieben, elektronisch synchronisierten Getrieben oder lastschaltenden Getrieben wird das Herausnehmen von Gängen häufig durch einen Federmechanismus bewirkt. Die Gänge werden durch einen Hinterschnitt der jeweiligen Klauenverzahnung in ihrer eingelegten Position gehalten. Wird das im jeweiligen Gang übertragene Moment klein, dann kann bei Unterschreiten eines bestimmten Momentes die Federkraft die Schaltklaue (Schiebemuffe) herausdrücken. Bei diesem Verfahren ist nachteilig, daß das Moment, bei dem der Gang herausfällt, nicht null ist, d.h. es gibt einen Momentensprung mit der erwähnten Komforteinbuße. Es kann darüber hinaus zu Betriebsfällen kommen, bei denen es zu einem Verspannen des Getriebes kommt. Darüber hinaus ist eine Hochschaltung im Schub bei oben erwähnten Lastschaltgetrieben prinzipiell nicht möglich, ohne ein Motormanagement zu betreiben, d.h. das negative Motormoment muß zumindest bis auf null erhöht werden. Dies geht mit den bereits geschilderten subjektiven Nachteilen für den Fahrer einher, der verschiedene Reaktionen des Motors nicht nachvollziehen kann und im Zweifelsfall subjektiv ein Gefühl der Gefährdung aufbaut.

Weiter ist im Stand der Technik ein Verfahren zur Steuerung eines Doppelkupplungsgetriebes bekannt (US-PS 4,527,678), wobei jeder Getriebeeingangswelle eine Reibkupplung zugeordnet ist und im Ausgangszustand eine der beiden Kupplungen im Haftzustand ein Motormoment überträgt. Hierbei wird die eine Kupplung, durch einen Schlupfregler geregelt, soweit geöffnet, daß sie bei einer Solldrehzahl ihrer motorseitigen Hälfte an der Gleitgrenze arbeitet, wobei die andere Kupplung gesteuert geschlossen wird, bis die eine, durch den Schlupfregler an der Gleitgrenze betriebene Kupplung kein Moment mehr überträgt. Zur Synchronisierung der freien Getriebeeingangswelle werden komplexe Schaltabläufe realisiert.

Der Erfindung liegt daher die Aufgabe zugrunde, ein Verfahren zum Schalten eines Doppelkupplungsgetriebes zu schaffen, sowie weiter ein Doppelkupplungsgetriebe zum Betrieb gemäß dem erfindungsgemäßen Verfahren, das völlig ohne eine Beeinflussung des Leistungsstellgliedes der jeweiligen Brennkraftmaschine auskommen kann (kein Motormanagement), und das sich zumindest prinzipiell so betreiben läßt, daß ein Herausnehmen von Gängen bei völlig geöffneter Kupplung und damit völlig ruckfrei erfolgen kann.

Auf diese Weise sollen die komfort- und funktionsstörenden Effekte der bekannten mechanischen Synchronisierung vermieden werden. Zusätzlich soll der für die herkömmlichen Synchronringe erforderliche Bauraum eingespart und das Trägheitsmoment reduziert werden. Die Hydraulik einer gegebenenfalls notwendigen Betätigungsvorrichtung zum Einlegen der Gänge soll ohne Druckmodulation betrieben werden können.

Die Lösung der Aufgabe ist bei dem gattungsgemäßen Verfahren alternativ durch die Kombination der Merkmale des Patentanspruches 1 realisiert oder durch die Kombination der Merkmale des Patentanspruches 2 realisiert.

Dabei stehen beide Lösungen gleichberechtigt nebeneinander.

Hinsichtlich des vorrichtungsmäßigen Teils ist die Erfindung gekennzeichnet durch eine Synchronisiervorrichtung, die die jeweils frei drehende Getriebeeingangswelle, d.h. die Getriebeeingangswelle des einzulegenden Ganges mit der Getriebeabtriebswelle zum Synchronisieren koppeln kann. Dabei ist die Synchronisiervorrichtung vorzugsweise in Form eines Reibradgetriebes ausgebildet, das folgende Reibräder aufweist:
- ein auf der zu synchronisierenden Getriebeeingangswelle angeordnetes Reibrad,
- ein auf der Getriebeabtriebswelle angeordnetes Reibrad, und
- ein auf einem schwenkbaren Träger angeordnetes Räderpaar, das in eine die beiden anderen Räder durch Reibschluß verbindende Lage geschwenkt werden kann.

Dabei ist insbesondere vorgesehen, daß vorteilhafterweise die Übersetzung von dem Reibradgetriebe, d.h. von Getriebeausgangswelle auf Getriebeeingangswelle, kleiner ist, als der kleinste, jeweils auf der Getriebeeingangswelle angeordnete Gang (höhere Eingangswellendrehzahl als im kleinsten Gang).

Altemativ kann auch vorgesehen sein, auf eines der beiden Räder des auf einem schwenkbaren Träger angeordneten Räderpaares zu verzichten, und stattdessen das andere koppelnde Reibrad nicht auf der Abtriebswelle anzuordnen, sondern auf einer an die Drehrichtung für den Rückwärtsgang umkehrendes Ritzel tragenden Welle.

Weitere bevorzugte Ausführungsformen der Erfindung sind in den Unteransprüchen beschrieben.

In der Terminologie dieser Patentanmeldung soll unter der "einen" Getriebeeingangswelle jeweils die zum Zeitpunkt der geplanten Getriebeschaltung Last übertragende, d.h. ein Moment führende Welle verstanden werden. Unter der "anderen" Getriebeeingangswelle wird jeweils die den zu schaltenden Gang tragende, zunächst frei rotierende Welle verstanden. Diese Welle wird demgemäß im Rahmen dieser Beschreibung auch als "freie" Getriebeeingangswelle bezeichnet.

Das Verfahren setzt also voraus, daß die andere, freie Getriebeeingangswelle zunächst mit geeigneten Mitteln auf eine synchrone Drehzahl gebracht wird, so daß ein Einlegen des Ganges ermöglicht wird. Dabei sind gemäß den Unteransprüchen verschiedene Möglichkeiten denkbar, um die synchrone Drehzahl der freien Getriebeeingangswelle zu erreichen. Die Synchronisierhilfe, wie sie in den Vorrichtungsansprüchen beschrieben ist, ist eine Möglichkeit. Auch durch geschicktes Steuern der zugeordneten Kupplung der anderen Getriebeeingangswelle kann die synchrone Drehzahl erreicht und ein Einlegen des Ganges ermöglicht werden.

Neben diesem gemeinsamen Verfahrensschritt dienen die anderen, alternativ in den Ansprüchen 1 und 2 aufgeführten Verfahrensschritte dazu, das zu übertragende Moment stetig von einer Kupplung auf die andere Kupplung "zu verlagern", ohne daß es zu einem Zustand kommt, in dem sich beide Kupplungen im Haftzustand befinden, also Momente mit unterschiedlichen Vorzeichen übertragen, was zu einem Blockieren des Getriebes führen würde.

Aus diesem Grund ist vorgesehen, die Drehzahl zumindest einer Kupplung auf einen Wert in der Nähe der Synchrondrehzahl im Gleitreibungsbereich zu regeln. Dabei ist gemäß den Unteransprüchen 9 und 10 insbesondere vorgesehen, einem Drehzahlregler eine Solldrehzahl vorzugeben, bzw. eine Solldrehzahl für die entsprechende Kupplung vorzugeben, die sich aus der Synchrondrehzahl zuzüglich oder abzüglich einer definierten Schlupfdrehzahl bemißt. Auf diese Weise wird sichergestellt, daß sich die geregelte Kupplung im Gleitreibungszustand befindet, wodurch ein Blockieren des Getriebes sicher ausgeschlossen werden kann.

Insbesondere ist vorgesehen, die Solldrehzahl der motorseitigen Hälfte der Kupplung zu bemessen, indem der Betriebszustand des Fahrzeuges, d.h. Zugbetrieb oder Schubbetrieb einerseits und die geplante Schaltung, d.h. Hochschalten oder Rückschalten, andererseits, berücksichtigt wird.

Bei der ersten alternativen grundsätzlichen Lösungsform für das Verfahren, definiert in Anspruch 1, ist gemäß Anspruch 9 insbesondere vorgesehen, daß die Solldrehzahl abhängig vom Betriebszustand des Fahrzeuges und der Schaltungsart so festgelegt wird, wie es in der folgenden Tabelle definiert ist:

| **Betriebsart des Fahrzeuges** | **Schaltungsart** | **Solldrehzahl für den Schlupfdrehzahlregler der einen** Kupplung |
|---|---|---|
| Zugbetrieb | Hochschaltung | Synchrondrehzahl der einen Getriebeeingangswelle + Schlupf |
| Zugbetrieb | Rückschaltung | Synchrondrehzahl der anderen Getriebeeingangswelle + Schlupf |
| Schubbetrieb | Hochschaltung | Synchrondrehzahl der anderen Getriebeeingangswelle - Schlupf |
| Schubbetrieb | Rückschaltung | Synchrondrehzahl der einen Getriebeeingangswelle - Schlupf |

Analog kann bei der zweiten alternativen Ausführungsform des Verfahrens, bei der nicht die eine Kupplung, sondern die der bis dahin freien Welle zugeordnete "andere" Kupplung geregelt wird, vorgesehen sein, daß die Solldrehzahl so bemessen wird, wie es in der nachstehenden Tabelle definiert ist:

| **Betriebsart des Fahrzeuges** | **Schaltungsart** | **Solidrehzahl für den Drehzahlregler der anderen Kupplung** |
|---|---|---|
| Zugbetrieb | Hochschaltung | Synchrondrehzahl der einen Getriebeeingangswelle + Schlupf |
| Zugbetrieb | Rückschaltung | Synchrondrehzahl der anderen Getriebeeingangswelle + Schlupf |
| Schubbetrieb | Hochschaltung | Synchrondrehzahl der anderen Getriebeeingangswelle - Schlupf |
| Schubbetrieb | Rückschaltung | Synchrondrehzahl der einen Getriebeeingangswelle - Schlupf |

Dabei ist in der Tabelle unter Schlupf eine festgelegte Drehzahldifferenz zu verstehen, deren absoluter Wert beispielsweise 50 U/min betragen kann. Dabei bezieht sich die Solldrehzahl immer auf die motorseitige Hälfte der Kupplung.

Insgesamt sind bei dem Verfahren drei Fallunterscheidungen gegeben, so daß insgesamt acht verschiedene Fälle zu unterscheiden sind. Zunächst ist zu unterscheiden, ob die Kupplung des Ausgangsganges, in der Terminologie dieser Anmeldung die "eine" Kupplung, geregelt werden soll, oder aber gemäß dem nebengeordneten Anspruch 2 die Kupplung des Zielganges, d.h. in der Terminologie dieser Anmeldung die "andere" Kupplung. Sodann ist zu unterscheiden, ob sich das Fahrzeug im Schubbetrieb oder im Zugbetrieb befindet, d.h. ob der Motor als Motorbremse betrieben wird (negatives Moment), oder aber das Fahrzeug antreibt (positives Motormoment). Schließlich ist zu unterscheiden, ob bei der geplanten Schaltung von einem kleinen in einen größeren Gang geschaltet werden soll (Hochschaltung), oder aber aus einem größeren in einen kleineren Gang geschaltet werden soll (Rückschaltung).

Für jede der beiden Verfahrensvarianten, d.h. unabhängig davon, welche Kupplung als geregelte Kupplung betrieben wird, ergeben sich somit vier unterschiedliche Fälle.

Bei der Durchführung des Verfahrens ist die Schaltungsart "Hochschaltung" sowohl im Zugbetrieb wie im Schubbetrieb unproblematisch. Die freie Getriebeeingangswelle, d.h. die den Zielgang tragende Welle, muß im ungünstigsten Fall vom Stillstand auf eine Synchrondrehzahl beschleunigt werden, die auf jeden Fall unterhalb der augenblicklichen Motordrehzahl liegt. Durch geeignete Steuerung der zugeordneten "anderen" Kupplung kann daher in jedem Fall die Synchrondrehzahl erreicht werden, die das Einlegen des Zielganges erlaubt.

Bei der Schaltungsart "Rückschaltung" ist die freie Getriebeeingangswelle des jeweiligen Zielganges auf Drehzahlen zu beschleunigen, die höher liegen, als die augenblickliche Drehzahl des das Fahrzeug antreibenden Motors. Für diesen Fall wird entweder eine Synchronisierhilfe in Form einer Übersetzung verwendet, die das zum Beschleunigen notwendige Moment von einer Getriebewelle abgreift, oder aber durch geschicktes Regeln der beiden Kupplungen wird erreicht, daß die im Schwungrad und allen rotierenden Teilen des Motors gespeicherte Energie in eine hohe Drehzahl der freien Getriebeeingangswelle umgesetzt wird.

Die letztgenannten Verfahrensmerkmale lassen sich bei der Rückschaltung im Schubbetrieb nicht anwenden. Die Bremswirkung des Motors verhindert eine ausreichende Beschleunigung der freien Getriebeeingangswelle, die lediglich mit geschickter Kupplungssteuerung bzw. -regelung allein nicht auf die notwendige Synchrondrehzahl zu beschleunigen ist.

Für diesen Betriebsfall kann wiederum auf die zusätzlich vorgesehene Synchronisierhilfe zurückgegriffen werden. Eine andere Möglichkeit ist es, nach Schließen der der freien Getriebeeingangswelle zugeordneten Kupplung ("andere" Kupplung) mittels Motormanagement eine Drehzahlsteigerung des bis dahin getriebenen Motors zu erzeugen, um die freie Getriebeeingangswelle zu beschleunigen. An dieser Betriebsweise ist nachteilig, daß es einerseits Voraussetzung ist, daß die eine Kupplung (Kupplung des Ausgangsganges) geöffnet ist, um eine vollständige Trennung von Getriebe und Motor zu erreichen, und daß andererseits die plötzlich auftretende Drehzahlsteigerung des Motors psychologisch nachteilig ist. Letzteres liegt daran, daß die Betriebsart "Rückschaltung bei Schubbetrieb" im allgemeinen bei Talabfahrten auftritt, bei denen eine plötzliche Drehzahlsteigerung des Motors den Fahrer verunsichert.

Soll das Verfahren und die Vorrichtung ohne Motormanagement auskommen, wie es aus verschiedenen Gründen, beispielsweise einer Vereinfachung der gesamten Motorsteuerung, wünschenswert sein kann, so ist die vorgesehene Synchronisierhilfe für eine Rückschaltung im Schubbetrieb notwendig.

Obwohl es generelle Zielsetzung ist, ein Doppelkupplungsgetriebe zu schaffen, das ohne herkömmliche Synchronringe auskommt, kann bei einer alternativen Ausführungsform vorgesehen sein, daß die Zahnräder des jeweils kleinsten Ganges auf jeder der beiden Getriebeeingangswellen mit einer herkömmlichen Synchronisiervorrichtung ausgestattet sind, die als Synchronisierhilfe für alle anderen Gänge auf der gleichen Getriebeeingangswelle verwendet werden. Auf diese Weise kann beispielsweise ein Sechsganggetriebe konstruiert werden, das lediglich im ersten und zweiten Gang herkömmliche Synchronringe aufweist.

Während beim Hochschalten das Vorbereiten des einzulegenden Ganges, d.h. das Herstellen der Synchrondrehzahl der freien Getriebeeingangswelle vor den anderen Verfahrensschritten durchgeführt werden kann, mithin Öffnen und Schließen der beiden Kupplungen ausschließlich zu dem Zweck dienen, das Motordrehmoment sanft von einer auf die andere Welle zu verlagern, können sich bei der Rückschaltung die in den Ansprüchen 1 und 2 genannten Verfahrensmerkmale zeitlich überschneiden, d.h. teilweise gleichzeitig ablaufen. Letzteres ist insbesondere dann der Fall, wenn die freie Getriebeeingangswelle des kleinen Ganges durch Schließen der anderen Kupplung beschleunigt werden soll.

Während die freie Getriebeeingangswelle generell auf die Synchrondrehzahl erst beschleunigt werden muß, sind Fälle denkbar, in denen sie über die Synchrondrehzahl hinaus auf eine höhere Drehzahl beschleunigt wird und der einzulegende Gang beim "Austrudeln" der Getriebeeingangswelle eingelegt wird. Dieser Vorgang kann beschleunigt werden, indem zusätzliche Reibmittel o.ä. vorgesehen sind, um die Getriebeingangswelle auf die Synchrondrehzahl herabzubremsen.

Die Erfindung wird nun anhand der Zeichnung näher beschrieben. In der Zeichnung zeigen:
- Figur 1: schematisch dargestellt den Aufbau eines erfindungsgemäßen Doppelkupplungsgetriebes mit Synchronlsiervorrichtung,
- Figur 2: den Verlauf von Motor- und Getriebeeingangsdrehzahlen, Motor- und Getriebeeingangsmomenten und Getriebeausgangsmoment für die Hochschaltung im Zug,
- Figur 3: den Verlauf von Motor- und Getriebeeingangsdrehzahlen, Motor- und Getriebeeingangsmomenten und Getriebeausgangsmoment für die Hochschaltung im Schub,
- Figur 4: den Verlauf von Motor- und Getriebeeingangsdrehzahlen, Motor- und Getriebeeingangsmomenten und Getriebeausgangsmoment für die Rückschaltung im Schub,
- Figur 5: den Verlauf von Motor- und Getriebeeingangsdrehzahlen, Motor- und Getriebeeingangsmomenten und Getriebeausgangsmoment für die Rückschaltung im Zug,
- Figur 6: die Darstellung von Figur 2, wobei zusätzlich das Gangeinlegen berücksichtigt ist,
- Figur 7: die Darstellung von Figur 3, wobei zusätzlich das Gangeinlegen berücksichtigt ist,
- Figur 8: die Darstellung von Figur 4, wobei zusätzlich das Gangeinlegen berücksichtigt ist,
- Figur 9: die Darstellung von Figur 5, wobei zusätzlich das Gangeinlegen berücksichtigt ist, und
- Fig. 10: eine alternative Ausführungsform der erfindungsgemäßen Synchronisiervorrichtung, bei der das die Drehrichtung bewirkende Ritzel des Rückwärtsganges zusätzlich angekoppelt ist.

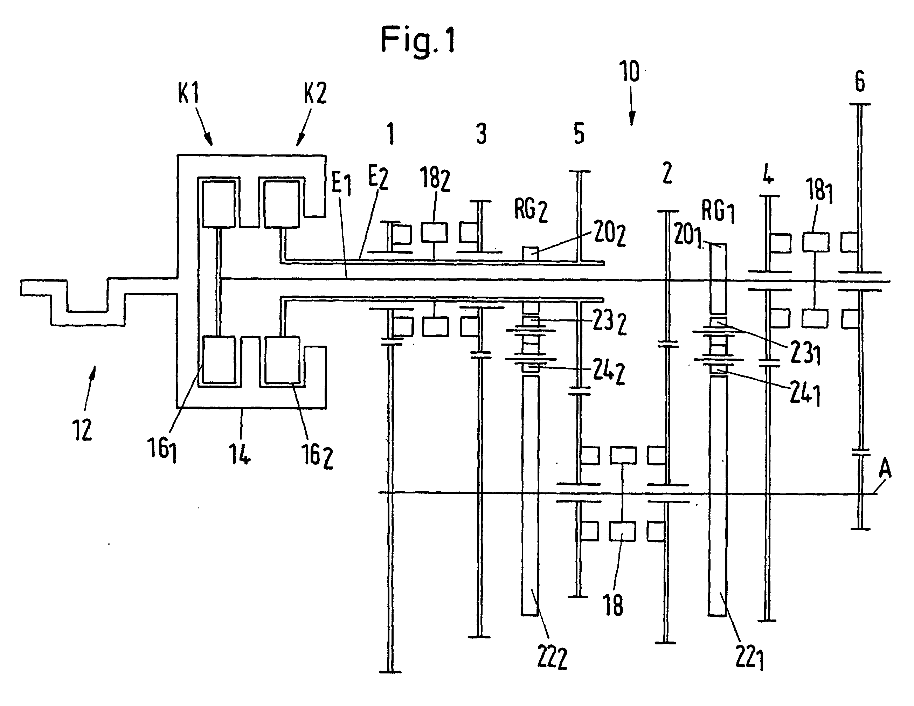

Figur 1 zeigt schematisch dargestellt ein Doppelkupplungsgetriebe 10, das durch eine Brennkraftmaschine angetrieben wird, die durch ihre Kurbelwelle 12 symbolisiert wird. Zwei Kupplungen K₁ und K₂ weisen einen gemeinsamen äußeren Kupplungskorb 14 auf und sind konzentrisch nebeneinander angeordnet. Mit der jeweiligen Reibplatte 16₁ und 16₂ sind eine (erste) Getriebeeingangswelle E₁ und eine andere (zweite) Getriebeeingangswelle E₂ verbunden. Die Getriebeeingangswelle E₂ ist als Hohlwelle ausgeführt und umgibt die Getriebeeingangswelle E₁.

Insgesamt sechs Zahnradpaarungen 1 bis 6 stehen für die einzelnen Gänge. Die Antriebsräder der Gänge 5 und 2 sind mit der jeweiligen Getriebeeingangswelle fest verbunden, während die Antriebsräder der Gänge 1, 3, 4 und 6 als nadelgelagerte Losräder ausgeführt sind, die klauenbetätigt über Schiebemuffen 18₁ und 18₂ betätigt werden können.

Eine Getriebeabtriebswelle A trägt insgesamt sechs Abtriebsräder, wobei die Abtriebsräder der Gänge 5 und 2 als Losräder ausgeführt sind und über eine Schiebemuffe 18_{A} geschaltet werden können. Die Abtriebsräder der Gänge 1, 3, 4 und 6 sind fest mit der Getriebeabtriebswelle A verbunden.

Im ersten Gang läuft der Kraftfluß über die geschlossene Kupplung K₂, die Getriebeeingangswelle E₂, die Schiebemuffe 18₂, das Antriebsrad des ersten Ganges auf das Abtriebsrad des ersten Ganges auf die Getriebeabtriebswelle A.

Bei eingerückter Kupplung K₂ und entsprechend nach rechts verschobener Schiebemuffe 18₂ ist der dritte Gang geschaltet, bei eingerückter Kupplung K₂ und Schiebemuffe 18_{A} in der linken Stellung ist der fünfte Gang geschaltet.

Analog sind bei eingerückter Kupplung K₁, jedoch geöffneter Kupplung K₂ die Gänge 2, 4 und 6 geschaltet, je nach Stellung der Schiebemuffen 18₁, 18₂ und 18_{A}.

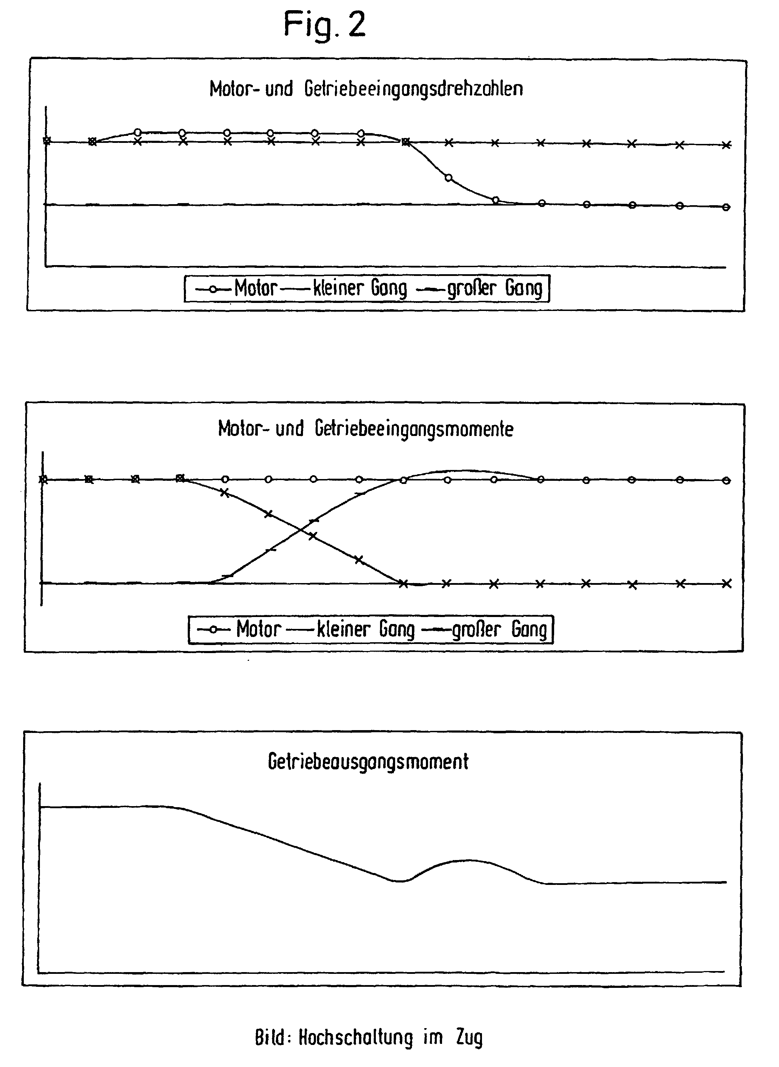

In der Nomenklatur der Ansprüche ist die Kupplung, die im Ausgangszustand die Motorleistung überträgt, d.h. im wesentlichen im eingerückten Zustand, d.h. in der Haftreibung, sich befindet, die "eine" Kupplung, während die zum Zielgang gehörige Kupplung die jeweils "andere" Kupplung ist. Die verschiedenen Schaltvorgänge, die denkbar sind, werden im folgenden anhand der Figuren 2 bis 9 erläutert.

Dabei gelten für alle Darstellungen folgende prinzipiellen Überlegungen: Bei Doppelkupplungsgetrieben können bei eingelegten Gängen beide Kupplungen im Eingriff sein. Dabei kann immer nur eine Kupplung in Haftreibung sein, aber es ist ein zulässiger Betriebszustand, wenn
- eine Kupplung in Haftreibung und die andere in Gleitreibung ist, oder
- beide Kupplungen in Gleitreibung sind.

Für jede einzelne Kupplung gilt:
- Ist eine Kupplung in Gleitreibung und ist die Motordrehzahl größer als die Getriebeeingangswellendrehzahl, dann wird positives (das Fahrzeug antreibende) Moment in die Getriebeeingangswelle eingespeist.
- Ist eine Kupplung in Gleitreibung und ist die Motordrehzahl kleiner als die Getriebeeingangswellendrehzahl, dann wird negatives (das Fahrzeug abbremsendes) Moment in die Getriebeeingangswelle eingespeist.

Für den Fall, daß beide Kupplungen eines Doppelkupplungsgetriebes in Gleitreibung sind, gilt folgendes:
- Ist die Motordrehzahl größer als die Getriebeeingangsdrehzahl des kleineren Ganges, dann übertragen beide Getriebeeingangswellen positives Moment.
- Ist die Motordrehzahl kleiner als die Getriebeeingangsdrehzahl des größeren Ganges, dann übertragen beide Getriebeeingangswellen negatives Moment.
- Ist der kleinere Gang in Haftreibung, dann überträgt der größere Gang positives Moment.

Der kleinere Gang ist dabei immer derjenige mit der höheren Getriebeeingangsdrehzahl.

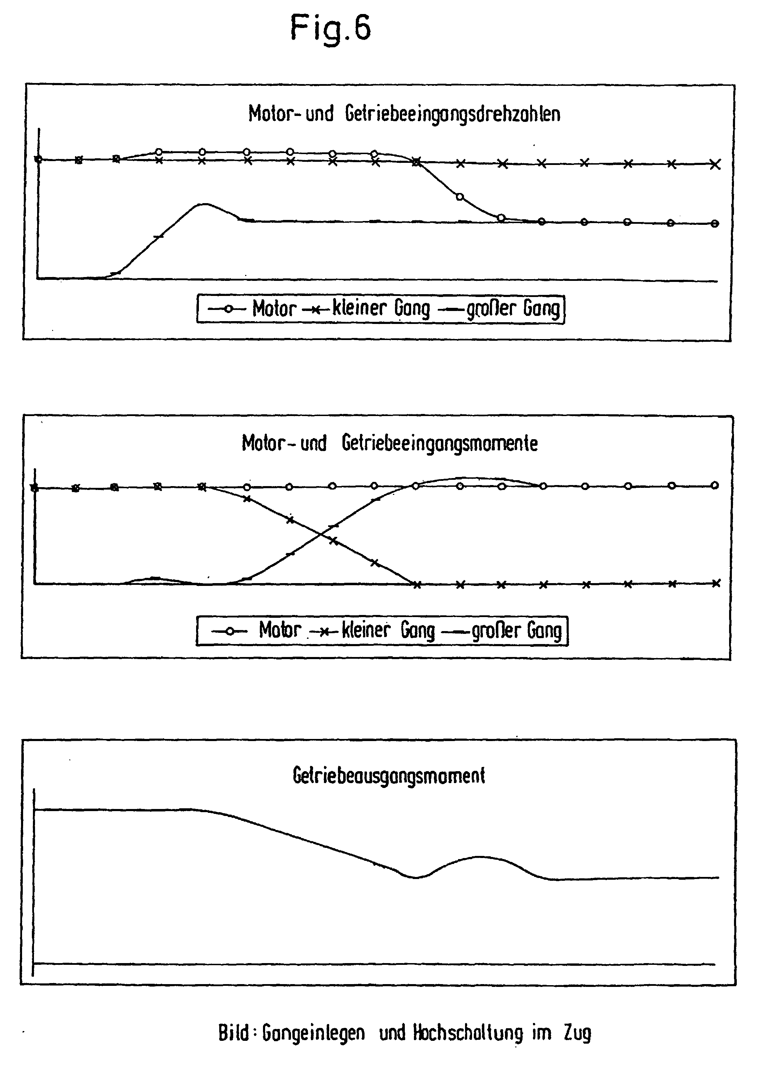

Bei den Figuren 2 bis 5 ist angenommen, daß der Zielgang, d.h. Gang, in den geschaltet werden soll, bereits eingelegt ist.
Der Einlegevorgang der Gänge wird zusätzlich anhand der Figuren 6 bis 9 beschrieben.

In den Figuren sind folgende Vereinfachungen gemacht:
- Keine Fahrzeugbeschleunigung während des Schaltvorgangs gezeichnet.
- Keine Momentenänderung des Motors durch Drehzahländerung bei Einleitung des Dauerschlupfs gezeichnet.
- Keine Momentenänderung durch Drehzahländerung des Motors während der Schaltvorgänge im Zug gezeichnet.

Figur 2 zeigt die Hochschaltung im Zug, d.h. der Motor liefert ein positives Drehmoment an das Getriebe. Zunächst ist die Kupplung des kleineren Ganges in Haftreibung, der größere Gang sei bereits eingelegt, aber die zugehörige Kupplung sei noch offen.

Für die in der Haftreibung sich befindende, die Motorleistung übertragende Kupplung des kleinen Ganges wird nun eine Schlupfregelung vorgenommen. Die Kupplungsanpressung und/oder der Kupplungsweg wird hierfür so weit reduziert, daß die Kupplung mit ganz geringem Schlupf rutscht Der Schlupf wird dann durch Reglerfunktionen (Solldrehzahlvorgabe) aufrechterhalten, wobei das Steuergerät zuvor aus der Tatsache, daß die Motordrehzahl Im Schlupfbetrieb höher ist, als die Getriebeeingangsdrehzahl, den Schluß ziehen kann, daß sich der Motor im Zugbetrieb befindet. Die Kupplung des großen Ganges wird jetzt rampenförmig (zunächst ungeregelt) geschlossen. Der große Gang übernimmt dabei immer mehr Motormoment. Durch den Schlupfregler öffnet dabei die Kupplung des kleinen Ganges in gleichem Maße. Wenn der große Gang das volle Motormoment erreicht hat, ist die Kupplung des kleinen Ganges vollständig geöffnet.

Der kleine Gang kann nun ohne Momentenreaktion, d.h. ohne Komforteinbußen, aus dem Triebstrang herausgenommen werden.

Da sich der Motor aber noch auf dem Drehzahlniveau des kleinen Ganges befindet, muß seine Drehzahl auf das Niveau des großen Ganges gesenkt werden, damit die jeweils andere Kupplung in Haftreibung übergehen kann. Hierzu muß die im Schwungrad gespeicherte Energie abgebaut werden. Dies wird durch ein vorübergehendes geregeltes Anheben des Momentes der Kupplung des großen Ganges erreicht Um Momentensprünge zu vermeiden, muß ein entsprechender Drehzahlverlauf gewählt werden. Methoden hierfür sind aus dem Stand der Technik bekannt.

Die anhand von Figur 2 beschriebene Verfahrensvariante entspricht dem Hauptanspruch 1. Alternativ kann die Regelstrategie entsprechend Hauptanspruch 2 umgedreht werden.

Während Figur 2 das Verfahren für die Kupplungsbetätigung darstellt, zeigt Figur 6 für den Fall "Hochschaltung unter Zug" analog zu Figur 2 zusätzlich, wie der für den Gangwechsel erforderliche Gang, ohne Synchronringe zu verwenden, eingelegt werden kann.

Der Motor dreht im Ausgangszustand zunächst mit der (höheren) Drehzahl des kleinen Ganges. Der größere Gang sei noch nicht eingelegt. Da die jeweils andere Kupplung geöffnet ist, dreht sich die zugehörige Getriebeeingangswelle im Idealfall nicht, in der Praxis dreht sie sich wegen nicht vermeidbarer Schleppmomente geringfügig. Die Kupplung des größeren Ganges wird nun etwas geschlossen. Durch das Kupplungsmoment wird die Drehzahl der frei drehenden Getriebeeingangswelle des Zielganges angehoben. Bei Erreichen der Synchrondrehzahl wird der große Gang eingelegt. Bei Überschreiten der Synchrondrehzahl des großen Ganges wird die Kupplung wieder ganz geöffnet. Der Gang ist nun eingelegt.

Alternativ kann vorgesehen sein, daß die Synchrondrehzahl des großen Ganges zunächst überschritten wird und die Kupplung sodann geöffnet wird. Beim anschließenden Auslaufen der Getriebeeingangswelle wird diese von höheren Drehzahlen herkommen die Synchrondrehzahl wieder erreichen. Wenn das Auslaufen nicht schnell genug erfolgt, kann eine Reibungsbremse verwendet werden, die als zusätzliche Synchronhilfe eingesetzt werden kann.

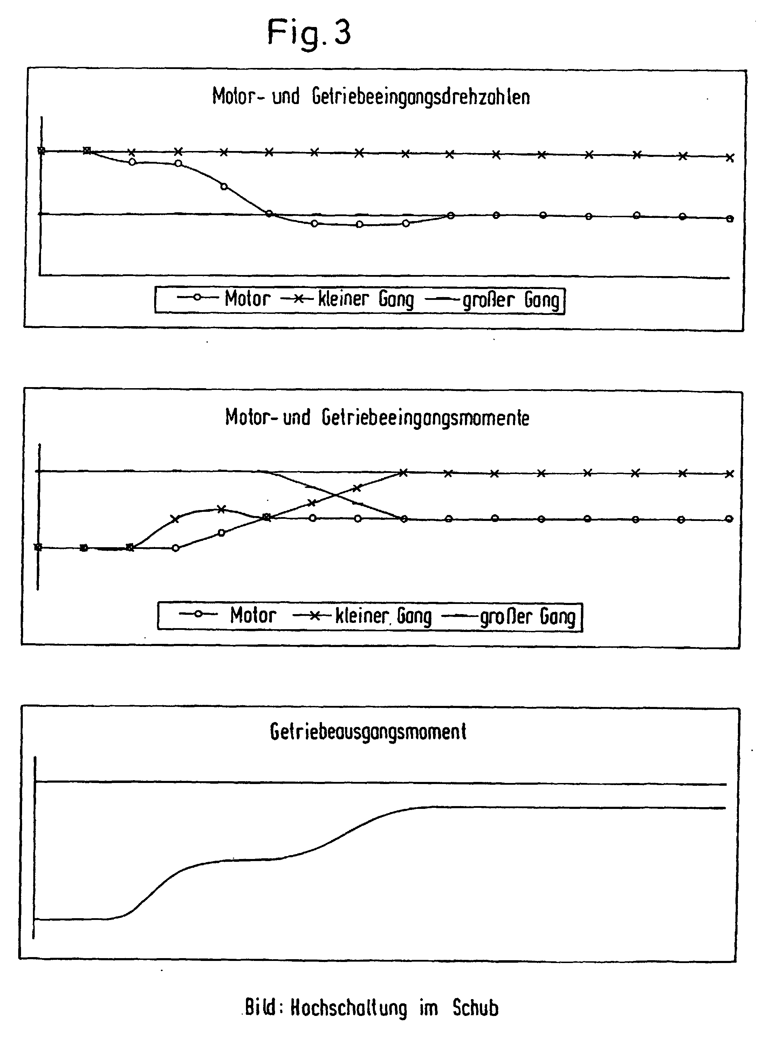

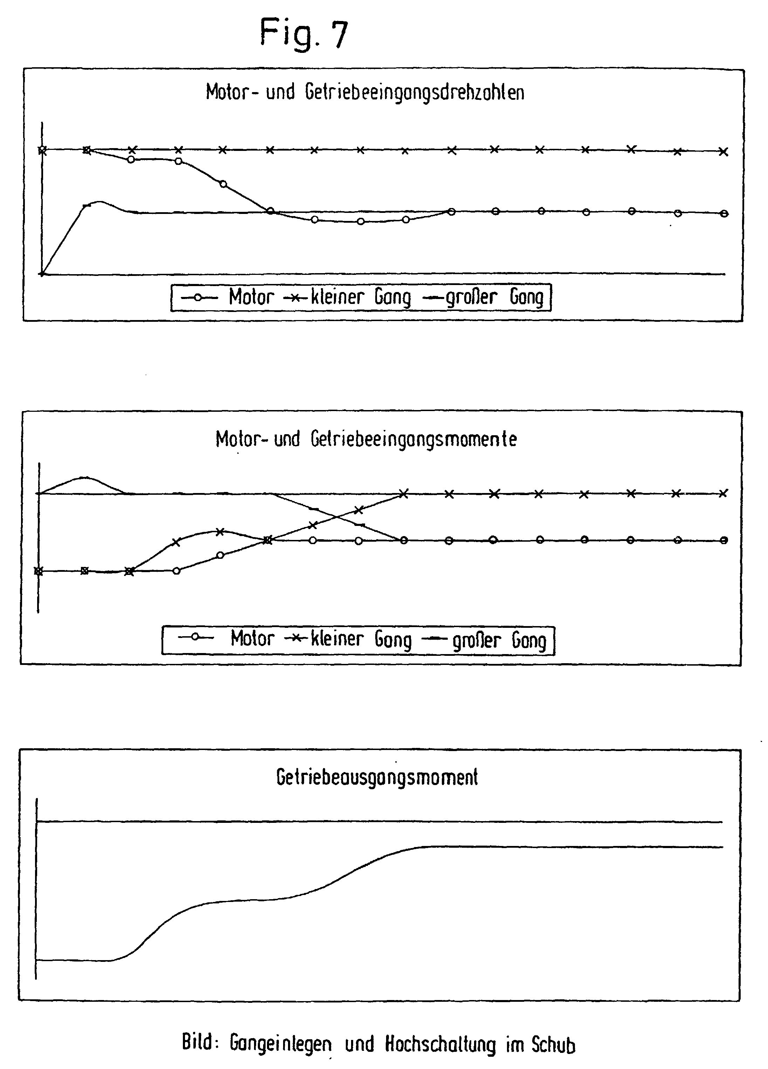

Die Figuren 3 und 7 zeigen analog die Verhältnisse für das Hochschalten im Schub. Wie Figur 3 zeigt, ist die Kupplung des kleineren Ganges zunächst geschlossen, der größere Gang ist eingelegt, aber die zugehörige Kupplung ist noch offen. Der Motor liefert ein negatives Moment, d.h. er arbeitet als Motorbremse. Wie bereits bei den vorhergehenden Schaltvorgängen erläutert, wird die Kupplung des kleinen Ganges in den Gleitzustand gebracht, d.h. die Kupplungsanpressung und/oder der Kupplungsweg wird so weit reduziert, bis die Kupplung mit geringem Schlupf rutscht (Synchrondrehzahl - 50 U/min).

Die Kupplung des kleinen Ganges überträgt - jetzt in Gleitreibung - das gesamte Motormoment. Aus der Tatsache, daß die Motordrehzahl im Schlupfbetrieb kleiner ist, als die Eingangswellendrehzahl des kleinen Ganges, kann das System ableiten, daß sich der Motor im Schubbetrieb befindet.

Im Schubbetrieb wird die eine Kupplung, d.h. die Kupplung des kleinen Ganges, zunächst gesteuert geöffnet. Dabei sinkt die Motordrehzahl, da die Bremswirkung entfällt. Der Schlupfregler, der einen Kupplung, wird dann so geschaltet, daß die Motordrehzahl anschmiegend in eine Drehzahl kurz unterhalb des großen Ganges einläuft (Solldrehzahl).

Der Schlupfregler hält für die Kupplung des kleinen Ganges die Drehzahl jetzt kurz unterhalb der Drehzahl des großen Ganges fest. Die Kupplung des großen Ganges schließt jetzt rampenförmig, wodurch der Schlupfregler des kleinen Ganges immer weiter geöffnet wird. Bei ganz geöffneter Kupplung des kleinen Ganges kann dieser herausgenommen werden. Die Kupplung des großen Ganges schließt rampenförmig weiter bis zur Haftreibung.

Der Gangeinlegevorgang gemäß Figur 7 erfolgt analog zu Figur 6.

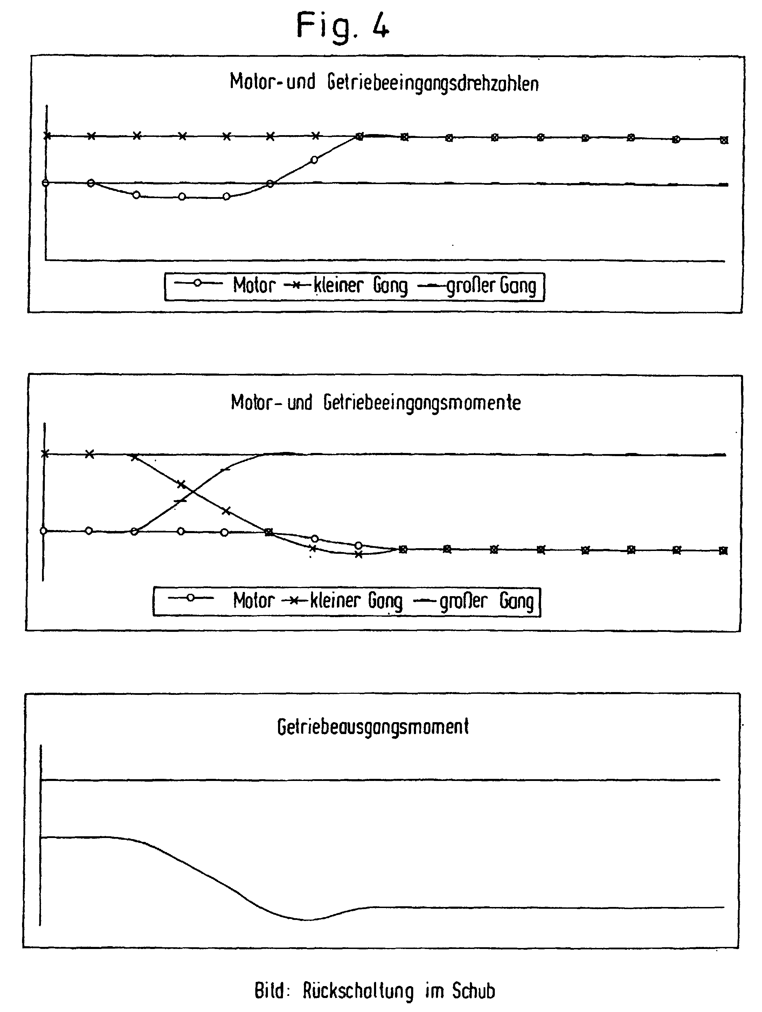

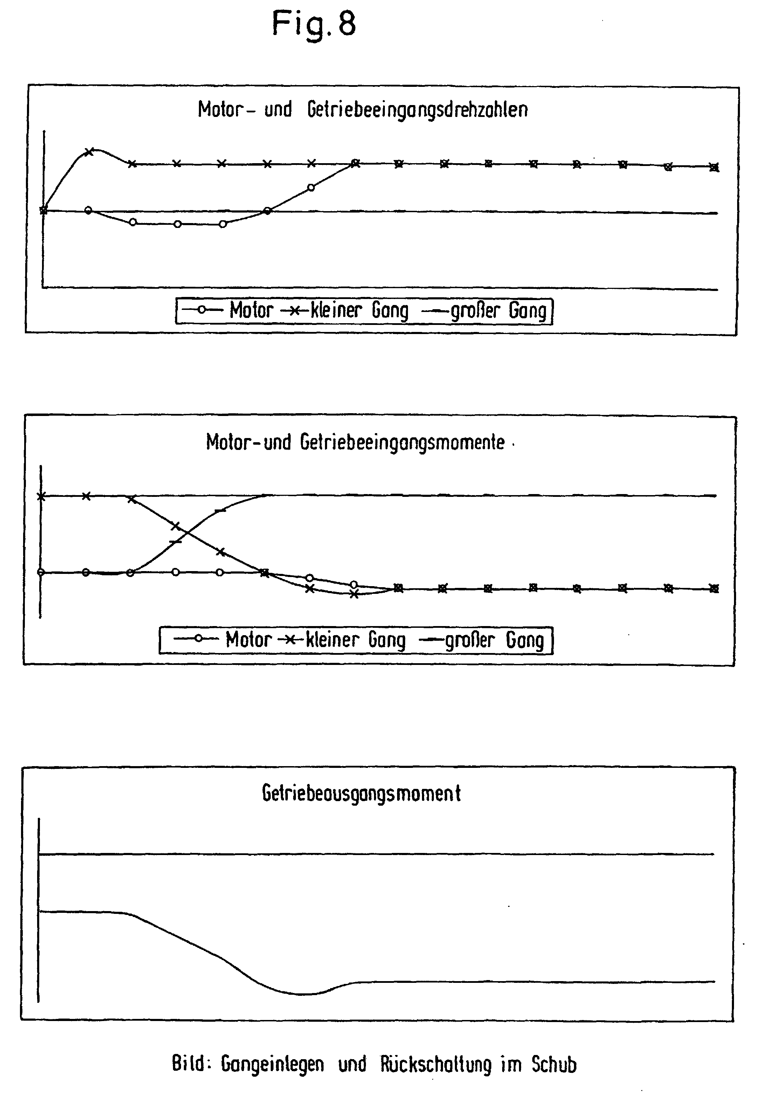

Die Figuren 4 und 8 zeigen die Verhältnisse für den Fall "Rückschaltung im Schub".

Für diesen Betriebsfall (und nur für diesen) ist die Verwendung einer zusätzlichen Synchronisiervorrichtung erforderlich, die in Figur 1 schematisch dargestellt Ist. Um die jeweilige Getriebeeingangswelle E₁ bzw. E₂ beim Rückschalten auf die notwendigen Drehzahlen beschleunigen zu können, ohne über ein Motormanagement die Motordrehzahl zu erhöhen, sind Reibradgetriebe RG₁ und RG₂ vorgesehen, die jeweils eine Getriebeeingangswelle E₁ oder E₂ mit der Getriebeabtriebswelle A verbinden können.

Jedes Reibradgetriebe RG₁ oder RG₂ weist jeweils ein Reibrad auf, das auf der jeweiligen Getriebeeingangswelle E₁ oder E₂ angeordnet ist. Diese Räder tragen die Bezugszeichen 20₁ und 20₂.

Analog sind zwei Reibräder auf der Abtriebswelle angeordnet. Diese tragen die Bezugszeichen 22₁ und 22₂. Zwischen den Reibrädern 20₁ und 22₁ bzw. 20₂ und 22₂ sind jeweils Paare von Reibrädern angeordnet, die auf einem schwenkbaren Träger angeordnet sind. Diese zusätzlichen Reibräder sind bezeichnet als 23₁, 24₁; 23₂, 24₂.

Sind die entsprechenden schwenkbaren Reibradpaare aus dem Reibschluß herausgeschwenkt, drehen sich die jeweilige Getriebeeingangswelle und die Abtriebswelle frei gegeneinander.

Nimmt man beispielsweise an, daß bei dem in Figur 4 gezeigten Ausführungsbeispiel der vierte Gang geschaltet ist und den Ausgangszustand darstellt, so muß beim Rückschalten in den dritten Gang die Getriebeeingangswelle E₂ beschleunigt werden, da im dritten Gang ein höheres Drehzahlniveau notwendig ist, als im vierten Gang. Dies kann durch Schließen des Reibradgetriebes RG₂ bewerkstelligt werden. Das Radpaar 23₂/24₂ wird in Reibschluß geschwenkt, so daß das an der Abtriebswelle anliegende Moment, das von dem gesamten Rotations-Trägheitsmoment des Kraftfahrzeuges, umgerechnet auf die Abtriebswelle, gespeist wird (J_{RED,KFZ}) dazu verwendet werden kann, die Getriebeeingangswelle E₂ zu beschleunigen, bis eine Drehzahl kurz oberhalb der Synchrondrehzahl des Zielganges erreicht ist. Das Reibpaar wird aus der Reibposition genommen und die austrudelnde Getriebeeingangswelle E₂ kann beim Durchlaufen der Synchrondrehzahl geschaltet werden.

Analog wird das Reibradgetriebe RG₁ verwendet, wenn im Schubbetrieb, d.h. bei negativem Motormoment (Motorbremse) aus einem ungeraden Gang In ein geraden Gang heruntergeschaltet werden soll, wozu die Getriebeeingangswelle E₁ beschleunigt werden muß. Ein Beispiel hierfür wäre das Rückschalten aus dem dritten in den zweiten Gang bei einer Talfahrt.

Die Schaltvorgänge bei der Rückschaltung im Schub sind ansonsten äquivalent zu den Hochschaltungen im Zug.

Dabei ist gemäß den beiden Hauptansprüchen jeweils eine invertierte Regelstrategie für die Kupplung K₁ und K₂ denkbar.

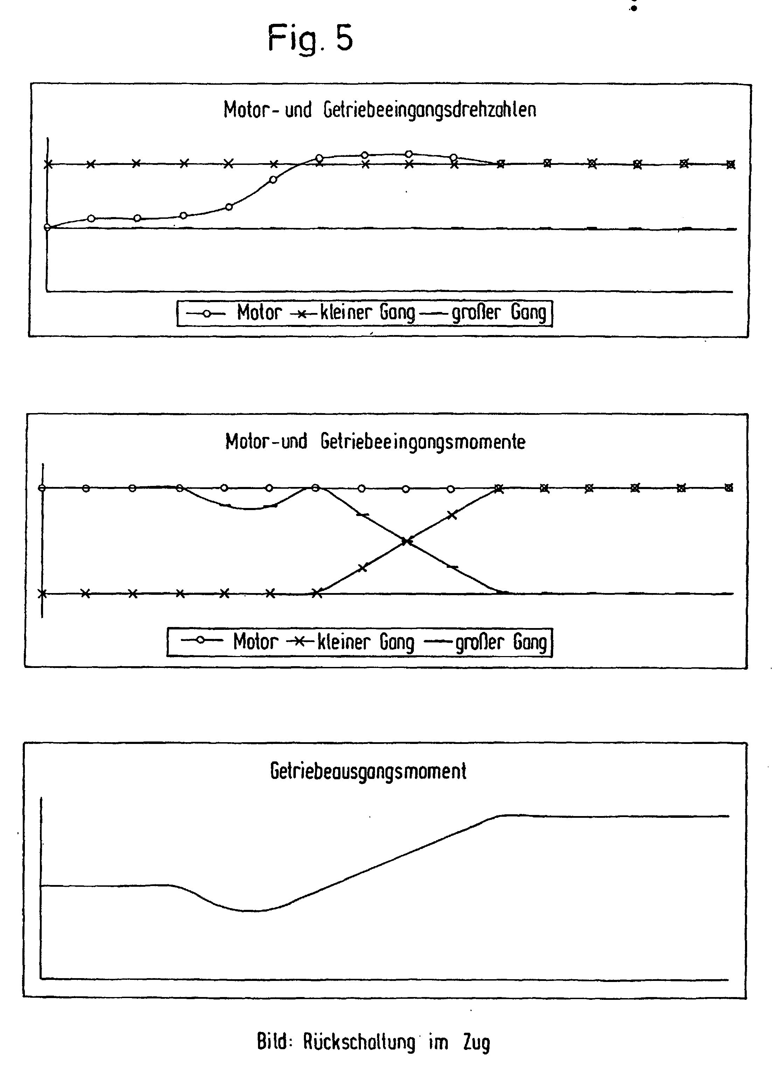

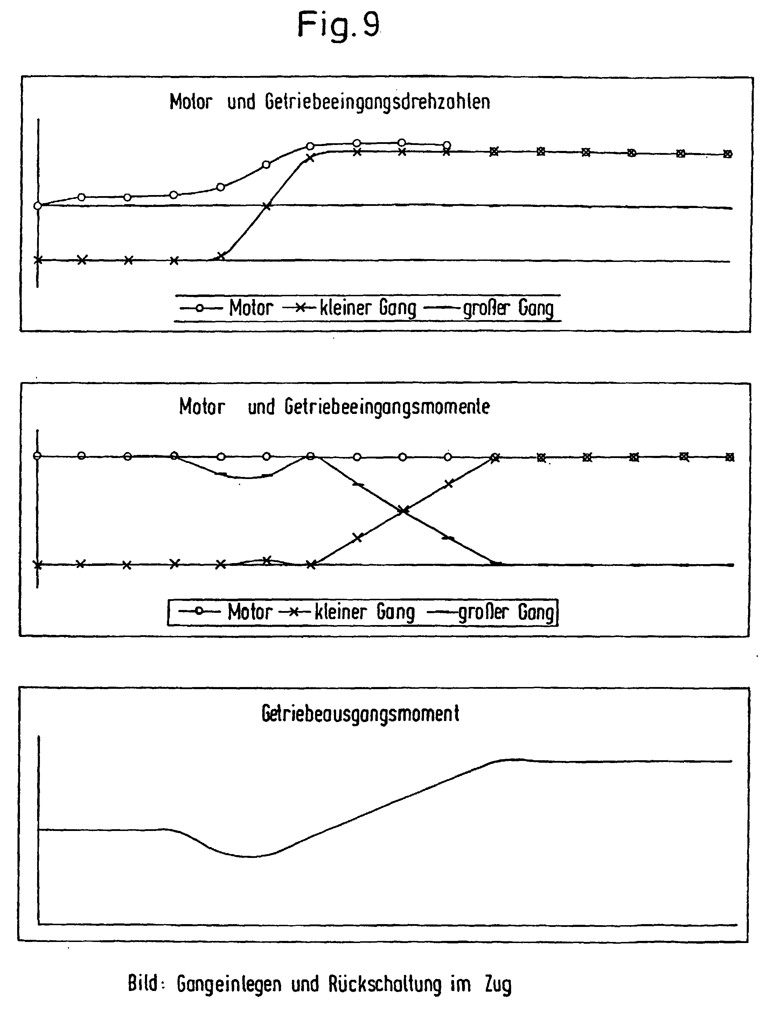

Die Figuren 5 und 9 zeigen den letzten denkbaren Betriebsfall, nämlich die Rückschaltung unter Zug.

Wie Figur 5 zeigt, ist die Kupplung des größeren Ganges geschlossen, d.h. in Haftreibung, der kleinere Gang ist nicht eingelegt, und die zugehörige Kupplung offen. Der Motor liefert positives Moment, d.h. er treibt das Fahrzeug. Für die Kupplung des großen Ganges wird jetzt der Schlupfregler aktiviert.

Die Kupplung des großen Ganges überträgt - jetzt in Gleitreibung - das gesamte Motormoment. Aus der Tatsache, daß die Motordrehzahl im Schlupfbetrieb größer ist, als die Getrlebewellendrehzahl, kann das System ableiten, daß sich der Motor im Zug befindet. Die Kupplung wird zunächst durch eine Rampe gesteuert geöffnet.

Dabei steigt die Motordrehzahl. Dann wird der Schlupfregler, der einen Kupplung so geschaltet, daß die Motordrehzahl anschmiegend in eine Drehzahl kurz oberhalb der des kleinen Ganges einläuft.

Da die Kupplung des großen Ganges (die "eine" Kupplung) rampenförmig oder geregelt geöffnet wurde, stieg die Motordrehzahl an, so daß die Kupplung (die "andere" Kupplung) des kleinen Ganges die zugehörige Getriebeeingangswelle der Motordrehzahl nachführen konnte. Bei Erreichen der Synchrondrehzahl wird gemäß Figur 9 der kleine Gang eingelegt.

Der Schlupfregler hält die Drehzahl der Kupplung des großen Ganges kurz oberhalb der Synchrondrehzahl des kleinen Ganges (Solldrehzahl). Die Kupplung des kleinen Ganges schließt jetzt rampenförmig, wodurch der Dauerschlupfregler die Kupplung des großen Ganges immer weiter öffnet Bei ganz geöffneter Kupplung des großen Ganges kann dieser herausgenommen werden. Die Kupplung des kleinen Ganges schließt rampenförmig weiter bis zur Haftreibung.

Über die erwähnten vier Grundkategorien des Schaltens hinaus können Mischformen auftreten. So muß beispielsweise beim Sonderfall "Rückschaltung vom Zug nach Schub" die beschriebene Synchronisationsvorrichtung benutzt werden.

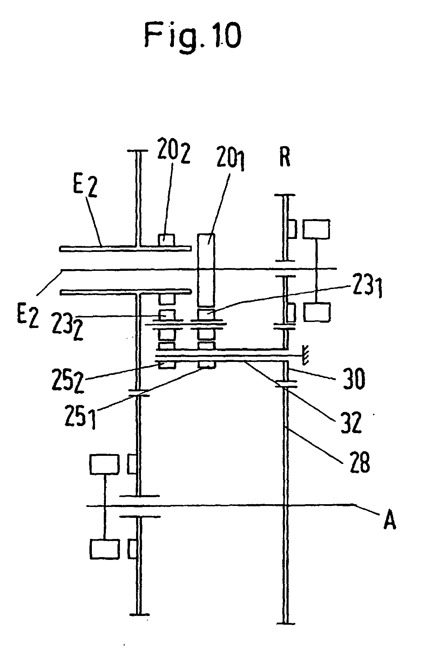

Figur 10 zeigt als zusätzliches Ausführungsbeispiel eine Ausführungsform der Synchronisiervorrichtung unter Verwendung des Rückwärtsganges. Das von der Abtriebswelle A gelieferte Moment, das von dem auf Welle A reduzierten Rotations-Trägheitsmoment des gesamten Fahrzeuges gespeist wird, und das entweder zum Beschleunigen der Getriebeeingangswelle E₂ oder der Getriebeeingangswelle E₁ verwendet werden soll, wird über das Zahnrad 28 des Rückwärtsganges R auf das zur Drehrichtungsumkehr verwendete Ritzel 30 gegeben. Die mit dem Ritzel verbundene Welle 32 trägt zwei Reibräder 25₁ und 25₂. Da eine Drehrichtungsumkehr bereits stattgefunden hat, ist lediglich ein Reibrad 23₁ bzw. 23₂ notwendig, um über die Reibräder 20₁ bzw. 20₂ die jeweils ausgewählte Getriebewelle zu beschleunigen. Die schwenkbaren Reibräder 23₁ und 23₂ sind auf einer gemeinsamen Welle angeordnet. Die antreibenden Reibräder 25₁ und 25₂ können ebenso wie die zur Kopplung dienenden Reibräder 23₁ und 23₂ jeweils zu einer Walze, d.h. einem zylinderförmigen Reibrad, zusammengefaßt sein.

Durch die gemäß Figur 10 geschaffene Ausführungsform wird Bauraum eingespart.

## Patentansprüche

1. Verfahren zum Schalten eines Doppelkupplungsgetriebes (10) mit zwei Getriebeeingangswellen (E₁, E₂) und einer Getriebeabtriebswelle (A), wobei jeder Getriebeeingangswelle (E₁, E₂) eine Reibkupplung (K₁, K₂) zugeordnet ist und im Ausgangszustand eine der beiden Kupplungen im Haftzustand ein Motormoment überträgt, und die andere Kupplung geöffnet ist, wobei die andere Getriebeeingangswelle auf synchrone Drehzahl gebracht und der neue Gang eingelegt wird, wobei die eine Kupplung durch einen Schlupfregler geregelt soweit geöffnet wird, daß sie bei einer Solldrehzahl ihrer motorseitigen Hälfte an der Gleitgrenze arbeitet, wobei die andere Kupplung gesteuert geschlossen wird, bis die eine, durch den Schlupfregler an der Gleitgrenze betriebene Kupplung kein Moment mehr überträgt, **dadurch gekennzeichnet, daß** die eine Kupplung dann voll geöffnet wird, so daß die andere Kupplung allein die Motorleistung überträgt, und dann erst der alte Gang momentfrei herausgenommen wird, daß die Drehzahl der jeweils anderen, freien Getriebeeingangswelle (E₁, E₂) mit Hilfe einer Synchronisiervorrichtung auf die passende synchrone Drehzahl beschleunigt oder gebremst wird und daß die Synchronisiervorrichtung das zum Beschleunigen der freien Getriebeeingangswelle (E₁, E₂) notwendige Moment von der Getriebeabtriebswelle (A) abgreift.

2. Verfahren zum Schalten eines Doppelkupplungsgetriebes (10) mit zwei Getriebeeingangswellen (E₁, E₂) und einer Getriebeabtriebswelle (A), wobei jeder Getriebeeingangswelle (E₁, E₂) eine Reibkupplung (K₁, K₂) zugeordnet ist und im Ausgangszustand eine der beiden Kupplungen im Haftzustand ein Motormoment überträgt, und die andere Kupplung geöffnet ist, wobei die andere Getriebeeingangswelle auf synchrone Drehzahl gebracht und der neue Gang eingelegt wird, wobei die andere Kupplung durch einen Schlupfregler geregelt soweit geschlossen wird, daß sie bei einer definierten Solldrehzahl ihrer motorseitigen Hälfte an der Gleitgrenze arbeitet, wobei die eine Kupplung gesteuert geöffnet wird, bis die andere durch den Schlupfregler an der Gleitgrenze betriebene Kupplung das volle, aus Motorleistung und Drehzahl sich ergebende Moment überträgt, **dadurch gekennzeichnet, daß** die andere Kupplung dann voll geschlossen wird, so daß die andere Kupplung allein die Motorleistung überträgt, und erst wenn die eine Kupplung voll geöffnet ist, der alte Gang momentfrei herausgenommen wird, daß die Drehzahl der jeweils anderen, freien Getriebeeingangswelle (E₁, E₂) mit Hilfe einer Synchronisiervorrichtung auf die passende synchrone Drehzahl beschleunigt oder gebremst wird und daß die Synchronisiervorrichtung das zum Beschleunigen der freien Getriebeelngangswelle (E₁, E₂) notwendige Moment von der Getriebeabtriebswelle (A) abgreift.

3. Verfahren nach Anspruch 1 oder 2, **dadurch gekennzeichnet, daß** die Synchronisiervorrichtung die Getriebeabtriebswelle (A) mit der freien, zu beschleunigenden Getriebeeingangswelle (E₁, E₂) mit einer Übersetzung verbindet, die kleiner ist, als der kleinste auf der jeweiligen Getriebeeingangswelle angeordnete Gang des Doppelkupplungsgetriebes (10).

4. Verfahren nach einem der Ansprüche 1 oder 2, **dadurch gekennzeichnet, daß** die Drehzahl der anderen, freien Getriebeeingangswelle durch Betätigen der zugehörigen Kupplung auf eine synchrone Drehzahl beschleunigt oder wieder abgebremst wird.

5. Verfahren nach einem der vorhergehenden Ansprüche, **dadurch gekennzeichnet, daß** der im Ausgangszustand eingelegte Gang des Doppelkupplungsgetriebes (10) genau dann herausgenommen wird, wenn er kein Moment überträgt.

6. Verfahren nach Anspruch 1 oder 2, **dadurch gekennzeichnet, daß** zum Abbremsen der freien Getriebeeingangswelle (E₁, E₂) eine Reibungsbremse verwendet wird.

7. Verfahren nach einem der vorhergehenden Ansprüche, **dadurch gekennzeichnet, daß** eine hydraulische Betätigungseinrichtung zum Wechseln der Gänge ohne Druckmodulation hydraulisch betätigt wird.

8. Verfahren nach einem der vorhergehenden Ansprüche, **dadurch gekennzeichnet, daß** das Leistungsstellglied einer das Doppelkupplungsgetriebe (10) antreibenden Brennkraftmaschine während des Schaltens unbeeinflußt bleibt (kein Motormanagement).

9. Verfahren nach Anspruch 1, **dadurch gekennzeichnet, daß**
- aus dem Vorzeichen des sich einstellenden Schlupfes an der einen Kupplung auf Zug- oder Schubbetrieb des Fahrzeuges geschlossen wird und
- die Solldrehzahl bei Zugbetrieb und Hochschaltung als Synchrondrehzahl der einen Getriebeeingangswelle zuzüglich einer definierten Schlupfdrehzahl festgelegt wird,
- die Solldrehzahl bei Zugbetrieb und Rückschaltung als Synchrondrehzahl der anderen Getriebeeingangswelle zuzüglich einer definierten Schlupfdrehzahl festgelegt wird,
- die Solldrehzahl bei Schubbetrieb und Hochschaltung als die Synchrondrehzahl der andren Getriebeeingangswelle abzüglich einer definierten Schlupfdrehzahl festgelegt wird, und
- die Solldrehzahl bei Schubbetrieb und Rückschaltung als die Synchrondrehzahl der einen Getriebeeingangswelle abzüglich einer definierten Schlupfdrehzahl festgelegt wird.

10. Verfahren nach Anspruch 2, **dadurch gekennzeichnet, daß**
- aus dem Vorzeichen des sich einstellenden Schlupfes an der einen Kupplung auf Zug- oder Schubbetrieb des Fahrzeuges geschlossen wird,
- die Solldrehzahl der anderen Kupplung bei Zugbetrieb und Hochschaltung als Synchrondrehzahl der einen Getriebeeingangswelle zuzüglich einer definierten Schlupfdrehzahl festgelegt wird,
- die Solldrehzahl der anderen Kupplung bei Zugbetrieb und Rückschaltung als Synchrondrehzahl der anderen Getriebeeingangswelle zuzüglich einer definierten Schlupfdrehzahl festgelegt wird,
- die Solldrehzahl der anderen Kupplung bei Schubbetrieb und Hochschaltung als Synchrondrehzahl der anderen Getriebeeingangswelle abzüglich einer definierten Schlupfdrehzahl festgelegt wird, und
- die Solldrehzahl der anderen Kupplung bei Schubbetrieb und Rückschaltung als Synchrondrehzahl der einen Getriebeeingangswelle abzüglich einer definierten Schlupfdrehzahl festgelegt wird.

11. Verfahren nach einem der Ansprüche 9 oder 10, **dadurch gekennzeichnet, daß** die Betätigung der geregelten Kupplung durch den Schlupfregler später einsetzt als das Stellen der ungeregelten Kupplung.

12. Verfahren nach einem der Ansprüche 9 oder 10, **dadurch gekennzeichnet, daß** zur Vorbereitung einer Hochschaltung in einem ersten Schritt die Kupplung des größeren Ganges so weit geschlossen wird, daß die Drehzahl der frei drehenden Getriebeeingangswelle des großen einzulegenden Ganges bis auf mindestens die Synchrondrehzahl angehoben wird, und daß bei Erreichen der Synchrondrehzahl der große Gang eingelegt wird.

13. Verfahren nach Anspruch 12, **dadurch gekennzeichnet, daß** die Synchrondrehzahl der zu schaltenden anderen Getriebeeingangswelle zunächst überschritten wird und die Kupplung bei Überschreiten der Synchrondrehzahl des großen Ganges vollständig geöffnet wird, und bei Auslaufen der Getriebeeingangswelle bei der Synchrondrehzahl der große Gang eingelegt wird.

14. Verfahren nach Anspruch 13, **dadurch gekennzeichnet, daß** die andere, frei laufende Getriebeeingangswelle nach Überschreiten der Synchrondrehzahl des großen Ganges durch Reibmittel abgebremst wird.

15. Verfahren nach Anspruch 4, **dadurch gekennzeichnet, daß** beim Rückschalten im Schubbetrieb die Drehzahl der anderen, freien Getriebeeingangswelle nach Betätigen der zugehörigen Kupplung dadurch auf eine synchrone Drehzahl beschleunigt wird, daß die Drehzahl des Motors entsprechend erhöht wird und bei Erreichen der Synchrondrehzahl der (kleine) Zielgang eingelegt wird.

16. Verfahren nach einem der Ansprüche 9 oder 10, **dadurch gekennzeichnet, daß** beim Rückschalten im Zugbetrieb nach Schließen der anderen Kupplung (Kupplung des Zielganges) der neue Gang dann eingelegt wird, wenn bei Öffnen der einen Kupplung (Kupplung des Ausgangsganges) die Drehzahl der freien Getriebeeingangswelle die Synchrondrehzahl erreicht.

17. Verfahren nach Anspruch 1 oder 2, **dadurch gekennzeichnet, daß** zur Vorbereitung einer Rückschaltung im Schubbetrieb in einem ersten Schritt die Drehzahl der frei drehenden Getriebeeingangswelle des kleinen, einzulegenden Ganges (Zielganges) auf mindestens die Synchrondrehzahl angehoben wird, indem auf der frei drehenden Welle angeordnete, dem kleinsten Gang der Welle zugeordnete, herkömmliche Synchronringe betätigt werden.

18. Doppelkupplungsgetriebe (10) mit zwei Getriebeeingangswellen (E₁, E₂) und einer Getriebeabtriebswelle (A), wobei jeder Getriebeeingangswelle eine Reibkupplung zugeordnet ist, und mit zugehörigen Zahnradpaarungen sowie einem Schlupfregler für eine Kupplung zum Betrieb gemäß eines Schaltverfahrens nach einem oder mehreren der Ansprüche 1 bis 17, **gekennzeichnet durch** eine Synchronisiervorrichtung (20₁, 23₁, 24₁, 22₁; 20₂, 23₂, 24₂, 22₂), die die jeweils frei drehende Getriebeeingangswelle mit der Getriebeabtriebswelle (A) zum Synchronisieren koppeln kann.

19. Doppelkupplungsgetriebe (10) nach Anspruch 18, **dadurch gekennzeichnet, daß** die Synchronisiervorrichtung ein Reibradgetriebe umfaßt.

20. Doppelkupplungsgetriebe (10) nach Anspruch 19, **dadurch gekennzeichnet, daß** das Reibradgetriebe folgende Reibräder aufweist:
- ein auf der zu synchronisierenden Getriebeeingangswelle angeordnetes Reibrad (20₁,20₂).
- ein auf der Getriebeabtriebswelle (A) angeordnetes Reibrad 22₁, 22₂), und
- ein auf einem schwenkbaren Träger angeordnetes Räderpaar (23₁, 24₁; 23₂, 24₂), das in eine die beiden anderen Räder durch Reibschluß verbindende Lage geschwenkt werden kann.

21. Doppelkupplungsgetriebe (10) nach Anspruch 20, **dadurch gekennzeichnet, daß** das Reibradgetriebe zwischen Getriebeabtriebswelle (A) und der jeweils frei laufenden Getriebeeingangswelle (E₁, E₂) eine Drehzahlübersetzung schafft, die kleiner ist, als die des kleinsten Ganges auf der jeweiligen Getriebeeingangswelle.

22. Doppelkupplungsgetriebe (10) nach Anspruch 21, **dadurch gekennzeichnet, daß** zwei jeweils vierrädrige Reibradgetriebe vorgesehen sind, von denen eins zwischen der einen Getriebeeingangswelle (E₁, E₂) und der Getriebeabtriebswelle (A) angeordnet ist und das andere zwischen der anderen Getriebeeingangswelle (E₁, E₂) und der Getriebeabtriebswelle (A).

23. Doppelkupplungsgetriebe (10) nach Anspruch 18, **dadurch gekennzeichnet, daß** die Synchronisiervorrichtung zusätzlich eine Reibungsbremse umfaßt.

24. Doppelkupplungsgetriebe (10) nach Anspruch 21, **dadurch gekennzeichnet, daß** Reibradgetriebe folgende Reibräder aufweist:
- ein auf der zu synchronisierenden Getriebeeingangswelle angeordnetes Reibrad (20₁, 20₂),
- ein auf einer Welle (32) angeordnetes Reibrad (25₁, 25₂), die mit einem zum Rückwärtsgang gehörenden, die Drehrichtung umkehrenden Ritzel (30) verbunden ist, und
- ein auf einem schwenkbaren Träger angeordnetes Rad (23₁, 23₂), das in eine die beiden anderen Räder durch Reibschluß verbindende Lage geschwenkt werden kann.

25. Doppelkupplungsgetriebe (10) nach Anspruch 24, **dadurch gekennzeichnet, daß** auf der Welle (32) zwei Reibräder (25₁, 25₂) oder ein walzenförmiges Reibrad angeordnet sind, und daß zwei jeweils auf einer zu synchronisierenden Getriebeeingangswelle (E₁, E₂) angeordnete Reibräder (20₁, 20₂) über ein koaxial zueinander angeordnetes, auf einem Träger schwenkbar gelagertes Räderpaar (23₁, 23₂) oder einer zylinderförmiges Reibrad koppelbar sind.

## Claims

1. Method for shifting a twin-clutch transmission (10) with two transmission input shafts (E₁, E₂) and a transmission output shaft (A), each transmission input shaft (E₁, E₂) being assigned a friction clutch (K₁, K₂) and, in the initial state, one of the two clutches transmitting an engine torque in a state of static friction and the other clutch being open, the other transmission input shaft being brought to a synchronous speed and the new gear being engaged, the one clutch being opened in a regulated manner by a slip controller to such an extent that, at a desired speed of its engine-side half, it operates at the slip limit, the other clutch being closed in a controlled manner until the one clutch, which is being operated at the slip limit by the slip controller no longer transmits any torque, **characterized in that** the one clutch is then fully opened, so that the other clutch transmits the engine power on its own, and only then is the old gear disengaged without torque, **in that** the speed of the other, free transmission input shaft (E₁, E₂) in each case is accelerated or braked with the aid of a synchronizer to the appropriate synchronous speed and **in that** the synchronizer takes the torque required to accelerate the free transmission input shaft (E₁, E₂) from the transmission output shaft (A).

2. Method for shifting a twin-clutch transmission (10) with two transmission input shafts (E₁, E₂) and a transmission output shaft (A), each transmission input shaft (E₁, E₂) being assigned a friction clutch (K₁, K₂) and, in the initial state, one of the two clutches transmitting an engine torque in a state of static friction and the other clutch being open, the other transmission input shaft being brought to a synchronous speed and the new gear being engaged, the other clutch being closed in a regulated manner by a slip controller to such an extent that, at a defined desired speed of its engine-side half, it operates at the slip limit, the one clutch being opened in a controlled manner until the other clutch, which is being operated at the slip limit by the slip controller, transmits the full torque resulting from the engine power and speed, **characterized in that** the other clutch is then fully closed, so that the other clutch transmits the engine power on its own, and only when the one clutch is fully open, is the old gear disengaged without torque, **in that** the speed of the other, free transmission input shaft (E₁, E₂) in each case is accelerated or braked with the aid of a synchronizer to the appropriate synchronous speed and **in that** the synchronizer takes the torque required to accelerate the free transmission input shaft (E₁, E₂) from the transmission output shaft (A).

3. Method according to Claim 1 or 2, **characterized in that** the synchronizer connects the transmission output shaft (A) to the free transmission input shaft (E₁, E₂) to be accelerated with a transmission ratio which is lower than the lowest gear, arranged on the respective transmission input shaft, of the twin-clutch transmission (10).

4. Method according to either of Claims 1 or 2, **characterized in that** the speed of the other, free transmission input shaft is accelerated or braked again to a synchronous speed by actuating the associated clutch.

5. Method according to one of the preceding claims, **characterized in that** the gear of the twin-clutch transmission (10) engaged in the initial state is disengaged precisely when it is not transmitting any torque.

6. Method according to Claim 1 or 2, **characterized in that** a friction brake is used to brake the free transmission input shaft (E₁, E₂).

7. Method according to one of the preceding claims, **characterized in that** a hydraulic actuating device is actuated hydraulically without pressure modulation to change the gears.

8. Method according to one of the preceding claims, **characterized in that** the power regulating element of an internal combustion engine driving the twin-clutch transmission (10) remains uninfluenced during gear changing (no engine management).

9. Method according to Claim 1, **characterized in that**
- traction or overrun operation of the vehicle is inferred from the sign of the slip which arises at the one clutch and
- the desired speed in the case of traction operation and changing up is defined as the synchronization speed of the one transmission input shaft plus a defined slip speed,
- the desired speed in the case of traction operation and changing down is defined as the synchronization speed of the other transmission input shaft plus a defined slip speed,
- the desired speed in the case of overrun operation and changing up is defined as the synchronization speed of the other transmission input shaft minus a defined slip speed, and
- the desired speed in the case of overrun operation and changing down is defined as the synchronization speed of the one transmission input shaft minus a defined slip speed.

10. Method according to Claim 2, **characterized in that**
- traction or overrun operation of the vehicle is inferred from the sign of the slip which arises at the one clutch,
- the desired speed of the other clutch in the case of traction operation and changing up is defined as the synchronization speed of the one transmission input shaft plus a defined slip speed,
- the desired speed of the other clutch in the case of traction operation and changing down is defined as the synchronization speed of the other transmission input shaft plus a defined slip speed,
- the desired speed of the other clutch in the case of overrun operation and changing up is defined as the synchronization speed of the other transmission input shaft minus a defined slip speed, and
- the desired speed of the other clutch in the case of overrun operation and changing down is defined as the synchronization speed of the one transmission input shaft minus a defined slip speed.

11. Method according to either of Claims 9 or 10, **characterized in that** the actuation of the regulated clutch by the slip controller starts later than the adjustment of the unregulated clutch.

12. Method according to either of Claims 9 or 10, **characterized in that**, to prepare an upward change, the clutch of the higher gear is, in a first step, closed to such an extent that the speed of the freely rotating transmission input shaft of the high gear to be engaged is raised to at least the synchronization speed and **in that**, when the synchronization speed is reached, the high gear is engaged.

13. Method according to Claim 12, **characterized in that** the synchronization speed of the other transmission input shaft, which is to be shifted, is initially exceeded and, when the synchronization speed of the high gear is exceeded, the clutch is completely opened and, as the transmission input shaft runs down, the high gear is engaged at the synchronization speed.

14. Method according to Claim 13, **characterized in that** the other, freely rotating transmission input shaft is braked by friction means once the synchronization speed of the high gear has been exceeded.

15. Method according to Claim **4, characterized in that**, when changing down in overrun mode, the speed of the other, free transmission input shaft is accelerated to a synchronous speed following actuation of the associated clutch by increasing the speed of the engine accordingly and engaging the (low) target gear when the synchronization speed is reached.

16. Method according to either of Claims 9 or 10, **characterized in that**, when changing down in traction mode, the new gear is engaged, after closure of the other clutch (clutch of the target gear) when, upon opening the one clutch (clutch of the original gear), the speed of the free transmission input shaft reaches the synchronization speed.

17. Method according to Claim 1 or 2, **characterized in that**, to prepare a downward change in overrun mode, the speed of the freely rotating transmission input shaft of the low gear (target gear) to be engaged is, in a first step, raised to at least the synchronization speed by actuating conventional synchronizer rings arranged on the freely rotating shaft and associated with the lowest gear on the shaft.

18. Twin-clutch transmission (10) with two transmission input shafts (E₁, E₂) and a transmission output shaft (A), each transmission input shaft being assigned a friction clutch, and having associated gearwheel pairs and a slip controller for a clutch for operation in accordance with a gear-change method according to one or more of Claims 1 to 17, **characterized by** a synchronizer (20₁, 23₁, 24₁, 22₁; 20₂, 23₂, 24₂, 22₂), which can couple the respective freely rotating transmission input shaft to the transmission output shaft (A) for the purpose of synchronization.

19. Twin-clutch transmission (10) according to Claim 18, **characterized in that** the synchronizer comprises a friction-wheel mechanism.

20. Twin-clutch transmission (10) according to Claim 19, **characterized in that** the friction-wheel transmission has the following friction wheels:
- a friction wheel (20₁, 20₂) arranged on the transmission input shaft to be synchronized,
- a friction wheel (22₁, 22₂) arranged on the transmission output shaft (A), and
- a pair of wheels (23₁, 24₁; 23₂, 24₂) which is arranged on a pivotable carrier and which can be pivoted into a position in which it connects the two other wheels by frictional engagement.

21. Twin-clutch transmission (10) according to Claim 20, **characterized in that** the friction-wheel mechanism provides a speed ratio between the transmission output shaft (A) and the respective freely rotating transmission input shaft (E₁, E₂) which is lower than that of the lowest gear on the respective transmission input shaft.

22. Twin-clutch transmission (10) according to Claim 21, **characterized in that** two friction-wheel mechanisms, each with four wheels, are provided, one of them being arranged between the one transmission input shaft (E₁, E₂) and the transmission output shaft (A) and the other being arranged between the other transmission input shaft (E₁, E₂) and the transmission output shaft (A).

23. Twin-clutch transmission (10) according to Claim 18, **characterized in that** the synchronizer additionally comprises a friction brake.

24. Twin-clutch transmission (10) according to Claim 21, **characterized in that** the friction-wheel mechanism has the following friction wheels:
- a friction wheel (20₁, 20₂) arranged on the transmission input shaft to be synchronized,
- a friction wheel (25₁, 25₂) which is arranged on a shaft (32) and is connected to a pinion (30) that belongs to the reverse gear and that reverses the direction of rotation, and
- a wheel (23₁, 23₂) which is arranged on a pivotable carrier and which can be pivoted into a position in which it connects the two other wheels by frictional engagement.

25. Twin-clutch transmission (10) according to Claim 24, **characterized in that** two friction wheels (25₁, 25₂) or a roller-shaped friction wheel are arranged on the shaft (32), and **in that** two friction wheels (20₁, 20₂) each arranged on a transmission input shaft (E₁, E₂) to be synchronized can be coupled via a pair of wheels (23₁, 23₂) which are arranged coaxially with respect to one another and are mounted pivotably on a carrier or via a cylindrical friction wheel.

## Revendications

1. Procédé de changement de vitesses d'une boîte de vitesses à double embrayage (10) comprenant deux arbres d'entrée de boîte de vitesses (E₁, E₂) et un arbre de sortie de boîte de vitesses (A), un embrayage à friction (K₁, K₂) étant associé à chaque arbre d'entrée de boîte de vitesses (E₁, E₂), et dans l'état initial, l'un des deux embrayages transmettant dans l'état d'adhérence un couple moteur et l'autre embrayage étant ouvert, l'autre arbre d'entrée de boîte de vitesses étant amené à une vitesse de rotation synchrone et la nouvelle vitesse étant enclenchée, le premier embrayage, régulé par un régulateur de glissement, étant ouvert dans une mesure telle qu'il fonctionne à la limite de glissement pour une vitesse de rotation de consigne de sa moitié côté moteur, l'autre embrayage étant fermé de manière commandée jusqu'à ce que le premier embrayage entraîné par le régulateur de glissement à la limite de glissement ne transmette plus aucun couple, **caractérisé en ce que** le premier embrayage est alors complètement ouvert, de sorte que l'autre embrayage transmette à lui seul la puissance du moteur, et alors seulement la vitesse antérieure est désenclenchée sans couple, **en ce que** la vitesse de rotation de l'autre arbre d'entrée de boîte de vitesses libre (E₁, E₂) respectif est accélérée ou ralentie à l'aide d'un dispositif de synchronisation à la vitesse de rotation synchrone appropriée, et **en ce que** le dispositif de synchronisation prélève le couple nécessaire pour l'accélération de l'arbre d'entrée de boîte de vitesses libre (E₁, E₂) de l'arbre de sortie de boîte de vitesses (A).

2. Procédé de changement de vitesses d'une boîte de vitesses à double embrayage (10) comprenant deux arbres d'entrée de boîte de vitesses (E₁, E₂) et un arbre de sortie de boîte de vitesses (A), un embrayage à friction (K₁, K₂) étant associé à chaque arbre d'entrée de boîte de vitesses (E₁, E₂), et dans l'état initial, l'un des deux embrayages transmettant dans l'état d'adhérence un couple moteur et l'autre embrayage étant ouvert, l'autre arbre d'entrée de boîte de vitesses étant amené à une vitesse de rotation synchrone et la nouvelle vitesse étant enclenchée, l'autre embrayage, régulé par un régulateur de glissement, étant fermé dans une mesure telle qu'il fonctionne à la limite de glissement pour une vitesse de rotation de consigne définie de sa moitié côté moteur, le premier embrayage étant ouvert de manière commandée, jusqu'à ce que l'autre embrayage entraîné par le régulateur de glissement à la limite de glissement transmette la totalité du couple résultant de la puissance du moteur et de la vitesse de rotation, **caractérisé en ce que** l'autre embrayage est alors complètement fermé, de sorte que l'autre embrayage transmette à lui seul la puissance du moteur, et seulement lorsque le premier embrayage est complètement ouvert, la vitesse antérieure est désenclenchée sans couple, **en ce que** la vitesse de rotation de l'autre arbre d'entrée de boîte de vitesses libre (E₁, E₂) respectif est accélérée ou ralentie à l'aide d'un dispositif de synchronisation à la vitesse de rotation synchrone appropriée, et **en ce que** le dispositif de synchronisation prélève le couple nécessaire pour l'accélération de l'arbre d'entrée de boîte de vitesses libre (E₁, E₂) de l'arbre de sortie de boîte de vitesses (A).

3. Procédé selon la revendication 1 ou 2, **caractérisé en ce que** le dispositif de synchronisation relie l'arbre de sortie de boîte de vitesses (A) à l'arbre d'entrée de boîte de vitesses (E₁, E₂) libre à accélérer, avec un rapport qui est inférieur à la plus petite vitesse de la boîte de vitesses à double embrayage (10) disposée sur l'arbre d'entrée de boîte de vitesses respectif.

4. Procédé selon l'une quelconque des revendications 1 ou 2, **caractérisé en ce que** la vitesse de rotation de l'autre arbre d'entrée de boîte de vitesses libre est accélérée ou ralentie par l'actionnement de l'embrayage associé à une vitesse de rotation synchrone.

5. Procédé selon l'une quelconque des revendications précédentes, **caractérisé en ce que** la vitesse de la boîte de vitesses à double embrayage (10) enclenchée dans l'état initial, est alors précisément désenclenchée lorsqu'elle ne transmet plus aucun couple.

6. Procédé selon la revendication 1 ou 2, **caractérisé en ce que** l'on utilise un frein à friction pour le ralentissement de l'arbre d'entrée de boîte de vitesses libre (E₁, E₂).

7. Procédé selon l'une quelconque des revendications précédentes, **caractérisé en ce qu'**un dispositif de commande hydraulique est actionné de manière hydraulique pour changer les vitesses sans modulation de pression.

8. Procédé selon l'une quelconque des revendications précédentes, **caractérisé en ce que** l'organe de réglage de puissance d'un moteur à combustion interne entraînant la boîte de vitesses à double embrayage (10) n'est pas affecté pendant le changement de vitesses (aucune gestion de moteur).

9. Procédé selon la revendication 1, **caractérisé en ce que**
- à partir du sens du glissement s'ajustant sur le premier embrayage, on déduit un fonctionnement en traction ou en poussée du véhicule et
- la vitesse de rotation de consigne lors du fonctionnement en traction et du passage à la vitesse supérieure est établie comme vitesse de rotation synchrone du premier arbre d'entrée de boîte de vitesses en plus d'une vitesse de rotation de glissement définie,
- la vitesse de rotation de consigne lors du fonctionnement en traction et du rétrogradage est établie comme vitesse de rotation synchrone de l'autre arbre d'entrée de boîte de vitesses en plus d'une vitesse de rotation de glissement définie,
- la vitesse de rotation de consigne lors du fonctionnement en poussée et d'un passage à la vitesse supérieure est établie comme vitesse de rotation synchrone de l'autre arbre d'entrée de boîte de vitesses moins une vitesse de rotation de glissement définie, et
- la vitesse de rotation de consigne lors du fonctionnement en poussée et du rétrogradage est établie comme vitesse de rotation synchrone du premier arbre d'entrée de boîte de vitesses moins une vitesse de rotation de glissement définie.

10. Procédé selon la revendication 2, **caractérisé en ce que**
- à partir du sens du glissement s'ajustant sur le premier embrayage, on déduit un fonctionnement en traction ou en poussée du véhicule,
- la vitesse de rotation de consigne de l'autre embrayage lors du fonctionnement en traction et du passage à la vitesse supérieure est établie comme vitesse de rotation synchrone du premier arbre d'entrée de boîte de vitesses en plus d'une vitesse de rotation de glissement définie,
- la vitesse de rotation de consigne de l'autre embrayage lors du fonctionnement en traction et du rétrogradage est établie comme vitesse de rotation synchrone de l'autre arbre d'entrée de boîte de vitesses en plus d'une vitesse de rotation de glissement définie,
- la vitesse de rotation de consigne de l'autre embrayage lors du fonctionnement en poussée et du passage à la vitesse supérieure est établie comme vitesse de rotation synchrone de l'autre arbre d'entrée de boîte de vitesses moins une vitesse de rotation de glissement définie, et
- la vitesse de rotation de consigne de l'autre embrayage lors du fonctionnement en poussée et du rétrogradage est établie comme vitesse de rotation synchrone du premier arbre d'entrée de boîte de vitesses moins une vitesse de rotation de glissement définie.

11. Procédé selon l'une quelconque des revendications 9 ou 10, **caractérisé en ce que** l'actionnement de l'embrayage régulé par le régulateur de glissement se met en oeuvre plus tard que le réglage de l'embrayage non régulé.

12. Procédé selon l'une quelconque des revendications 9 ou 10, **caractérisé en ce que** pour la préparation d'un passage à la vitesse supérieure, dans une première étape, l'embrayage de la vitesse supérieure est fermé dans une mesure telle que la vitesse de rotation de l'arbre d'entrée de boîte de vitesses tournant librement de la vitesse supérieure à enclencher soit augmentée jusqu'à au moins la vitesse de rotation synchrone, et qu'à l'obtention de la vitesse de rotation synchrone, la vitesse supérieure soit enclenchée.

13. Procédé selon la revendication 12, **caractérisé en ce que** la vitesse de rotation synchrone de l'autre arbre d'entrée de boîte de vitesses à commuter est d'abord dépassée et l'embrayage, lors du dépassement de la vitesse de rotation synchrone de la vitesse supérieure, est entièrement ouvert, et lors du ralentissement de l'arbre d'entrée de boîte de vitesses à la vitesse de rotation synchrone, la vitesse supérieure est enclenchée.

14. Procédé selon la revendication 13, **caractérisé en ce que** l'autre arbre d'entrée de boîte de vitesses tournant librement, après le dépassement de la vitesse de rotation synchrone de la vitesse supérieure, est freiné par des moyens de friction.

15. Procédé selon la revendication 4, **caractérisé en ce que** lors du rétrogradage en fonctionnement en poussée, la vitesse de rotation de l'autre arbre d'entrée de boîte de vitesses libre est accélérée après l'actionnement de l'embrayage associé à une vitesse de rotation synchrone de telle sorte que la vitesse de rotation du moteur soit augmentée en conséquence et qu'à l'obtention de la vitesse de rotation synchrone la vitesse souhaitée (inférieure) soit enclenchée.

16. Procédé selon l'une quelconque des revendications 9 ou 10, **caractérisé en ce que,** lors du rétrogradage en fonctionnement en traction après la fermeture de l'autre embrayage (embrayage de la vitesse souhaitée), la nouvelle vitesse est enclenchée lorsque, à l'ouverture du premier embrayage (embrayage de la vitesse initiale), la vitesse de rotation de l'arbre d'entrée de boîte de vitesses libre atteint la vitesse de rotation synchrone.

17. Procédé selon la revendication 1 ou 2, **caractérisé en ce que** pour la préparation d'un rétrogradage en fonctionnement en poussée, dans une première étape, la vitesse de rotation de l'arbre d'entrée de boîte de vitesses tournant librement de la vitesse inférieure à enclencher (vitesse souhaitée) est augmentée à au moins la vitesse de rotation synchrone, en actionnant les bagues de synchronisation usuelles disposées sur l'arbre tournant librement, associées à la plus petite vitesse de l'arbre.

18. Boîte de vitesses à double embrayage (10) comprenant deux arbres d'entrée de boîte de vitesses (E₁, E₂) et un arbre de sortie de boîte de vitesses (A), un embrayage à friction étant associé à chaque arbre d'entrée de boîte de vitesses, et comprenant des paires de roues dentées associées ainsi qu'un régulateur de glissement pour un embrayage, pour le fonctionnement selon un procédé de changement de vitesses selon l'une ou plusieurs des revendications 1 à 17, **caractérisée par** un dispositif de synchronisation (20₁, 23₁, 24₁, 22₁ ; 20₂, 23₂, 24₂, 22₂), qui peut accoupler l'arbre d'entrée de boîte de vitesses respectif tournant librement à l'arbre de sortie de boîte de vitesses (A) en vue de la synchronisation.

19. Boîte de vitesses à double embrayage (10) selon la revendication 18, **caractérisée en ce que** le dispositif de synchronisation comprend une boîte de vitesses à roues de friction.

20. Boîte de vitesses à double embrayage (10) selon la revendication 19, **caractérisée en ce que** la boîte de vitesses à roues de friction présente les roues de friction suivantes :
- une roue de friction (20₁, 20₂) disposée sur l'arbre d'entrée de boîte de vitesses à synchroniser,
- une roue de friction (22₁, 22₂) disposée sur l'arbre de sortie de boîte de vitesses (A), et
- une paire de roues (23₁, 24₁ ; 23₂, 24₂) disposée sur un support pivotant qui peut être pivoté dans une position reliant les deux autres roues par adhérence à friction.

21. Boîte de vitesses à double embrayage (10) selon la revendication 20, **caractérisée en ce que** la boîte de vitesses à roues de friction produit entre l'arbre de sortie de boîte de vitesses (A) et l'arbre d'entrée de boîte de vitesses respectif tournant librement (E₁, E₂), un rapport de transmission de vitesse de rotation qui est inférieur à celui de la plus petite vitesse sur l'arbre d'entrée de boîte de vitesses respectif.

22. Boîte de vitesses à double embrayage (10) selon la revendication 21, **caractérisée en ce que** l'on prévoit deux boîtes de vitesses à roues de friction à quatre roues respectives, dont une est disposée entre le premier arbre d'entrée de boîte de vitesses (E₁, E₂) et l'arbre de sortie de boîte de vitesses (A), et l'autre entre l'autre arbre d'entrée de boîte de vitesses (E₁, E₂) et l'arbre de sortie de boîte de vitesses (A).

23. Boîte de vitesses à double embrayage (10) selon la revendication 18, **caractérisée en ce que** le dispositif de synchronisation comprend en outre un frein à friction.

24. Boîte de vitesses à double embrayage (10) selon la revendication 21, **caractérisée en ce que** la boîte de vitesses à roues de friction présente les roues de friction suivantes :
- une roue de friction (20₁, 20₂) disposée sur l'arbre d'entrée de boîte de vitesses à synchroniser,
- une roue de friction (25₁, 25₂) disposée sur un arbre (32) connecté à un pignon (30) appartenant à la vitesse de marche arrière, inversant le sens de rotation, et
- une roue (23₁, 23₂) disposée sur un support pivotant qui peut être pivoté dans une position reliant les deux autres roues par adhérence à friction.

25. Boîte de vitesses à double embrayage (10) selon la revendication 24, **caractérisée en ce que** deux roues de friction (25₁, 25₂) ou une roue de friction en forme de rouleau sont disposées sur l'arbre (32), et **en ce que** deux roues de friction (20₁, 20₂) disposées respectivement sur un arbre d'entrée de boîte de vitesses (E₁, E₂) à synchroniser peuvent être accouplées par le biais d'une paire de roues (23₁, 23₂) disposées coaxialement l'une à l'autre, montées à pivotement sur un support, ou d'une roue de friction de forme cylindrique.
